# EUROPEAN PATENT APPLICATION

(11) **EP 2 518 628 A1**
(43) Date of publication of application: **31.10.2012**
(21) Application number: 12155321.8
(22) Date of filing: 14.02.2012
(51) Int. Cl.: G06F 11/30

(54) **Processing device, controlling unit, and method for processing**

(30) Priority: 27.04.2011 JP 2011099222
(71) Applicant: Fujitsu Limited, Kawasaki-shi, Kanagawa 211-8588 (JP)
(72) Inventor: Yamasaki, Shinichi, Kanagawa, 211-8588 (JP); Nonomura, Yukinobu, Kanagawa, 211-8588 (JP); Aihara, Masatoshi, Kanagawa, 211-8588 (JP)
(74) Representative: HOFFMANN EITLE

(57) **Abstract**

Each of the boards (20) sequentially reads, in response to an execution instruction from a manager (10), the procedural steps from a memory (20b), controls devices (21a,21b,22a∼22c) on the board (20) through sequentially carrying out processing corresponding to each of the read procedural steps, and notifies a result of the carrying out the procedural steps to the manager (10).

## Description

### FIELD

The embodiments discussed herein are a processing device, a controlling unit, and a method for processing.

### BACKGROUND

A computer system of a typical High Performance Computing (HPC) model includes a number of nodes mounted on racks. Each node is a processing unit that operates under control of a single Operating System (OS) and consists of a single board (hereinafter called System Board (SB)) and devices, such as a processor and a memory device, mounted on the board. A large-scale computer system including a number of nodes is high-densely mounted for reduction of footprint cost. In accordance with increase in density, the number of devices constituting the computer system increases and the number of devices to be controlled for system operation also increases. This also increase load on a system controller (hereinafter called Service Processor (SP)) that operates and controls the computer system, and therefore starting up the system, intervals of device monitoring, and acquiring logs when hardware error occurs take longer time. Increase in time for system control impedes smooth operation of the computer. With the above problems in view, a system control scheme with a small load is demanded.

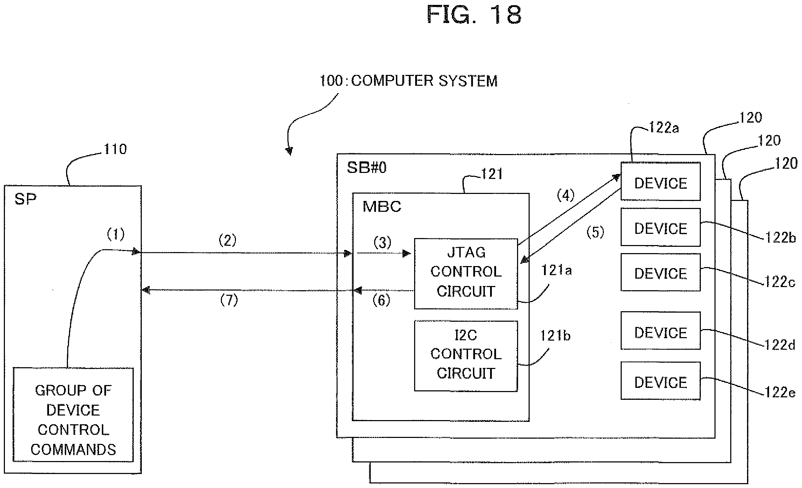

Hereinafter, a normal computer system 100 will now be described with reference to Fig. 18. The normal computer system 100 of Fig. 18 includes a number of boards (SBs) 120 each mounted thereon a number of devices 122a-122e, and an SP 110 that manages the SBs 120. The devices 122a-122e mounted on each SB 120 are, for example, a power-source device, a memory device, an arithmetic device, and a communication device, and can be controlled by the SP 110. In the example of Fig. 18, the devices 122a-122e are assumed to be controlled through either one of a Joint Test Action Group (JTAG) control interface and an Inter-Integrated Circuit (I2C) control interface.

Each SB 120 includes a controller (hereinafter call Maintenance Bus Controller (MBC)) 121 including two control circuits of a JTAG controlling circuit 121a and an I2C controlling circuit 121b functioning as control interfaces with the devices 122a-122e mounted on the SB 120. Upon receipt of an instruction of controlling the devices 122a-122e from the SP 110 through a dedicated control/communication route, the MBC 121 selects one of the control circuits 121a and 121b associated with the control interface of each object device to be controlled, and controls the object device through the selected control circuit 121a or 121b.

In addition to the function of controlling the devices 122a-122e, the SP 110 has functions of suggesting the operator to set various modes of system operation, and replace a device, and of notifying the operator of the state of the hardware and occurrence of a failure. Furthermore, the SP 110 has a function of assisting replacement for broken device. These functions accomplish operation and maintenance (i.e., system control) of the computer system 100.

Next, operation of the SP 110 in the computer system 100 will now be detailed with reference to Fig. 18. Specifically, the operation of the SP 110 to control the device 122a mounted on an SB 120 (SB#0) will be detailed. Here, the device 122a is assumed to be controlled via the JTAG control interface scheme.
In order to control the device 122a in the SB#0, the SP 110 sends the MBC 121 of the SB#0 a control command of the control interface (here, the JTAG control interface) for the device 122a among the group of device control commands (see arrow (1) and (2)). A control command varies with the control interface for a device to be controlled.

Upon receipt of the control command from the SP 110, the MBC 121 of the SB#0 refers to the received command to recognize that the received command is a JTAG control command directed to the device 122a, and activates the JTAG controlling circuit 121a for the device 122a (see arrow (3)). The JTAG controlling circuit 121a carries out control corresponding to the received control command on the device 122a (see arrow (4)), and obtains the result of the control and the obtained information from the device 122a (see arrow (5)). Then, the MBC 121 of the SB#0 replies to the SP 110 with the result of the controlling of the device 122a and the obtained information that are obtained by the JTAG controlling circuit 121a (see arrow (6) and (7)). The SP 110 makes various determinations on the basis of the result of controlling the device 122a and the obtained information received from the MBC 121.

After that, the same processing (see arrows (1) to (7)) as the above is sequentially carried out for each of the commands in the group of device control commands (command list). In addition, the same processing (see arrows (1) to (7)) as the above is also carried out on the remaining devices 122b-122e on the SB#0 and on the devices on the remaining SB 120, and consequently, so that the system control is accomplished.

At that time, since the computer system 100 of Fig. 18 includes a variety of SBs 120 and a variety of devices mounted on the SBs 120, the SP 110 carries out the control based on commands, considering the order of processing commands for each type of SB and each type of device. This increases the time for the control based on the commands in accordance with increase in the number of SBs and the number of devices. In addition, assuming that a group of device control commands is a command list containing 100 entries, the computer system 100 involves 100 times of instruction from the SP 110 to the MBC 121 of an SB 120 and 100 times of confirmation of the result of the control from the MBC 121.

[Patent Literature] Japanese Laid-open Patent Publication No. 2002-163239

In a large-scale and high-performance computer system, such as an HPC system, includes a large number of SBs. In order to meet social demand for performance, the number of SBs constituting a computer system is being growing, but the system is high-densely mounted so as to save the footprint resulting from enhancement in the system scale. The high-densely mounting increases the number of SBs to be controlled by the SP and the number of devices to be mounted on each SB. For the above, the time that the SP takes for controlling each individual device, such as initialization of the system, acquiring log, and periodically monitoring the state of the device is increased, and the load on the entire system control by the SP problematically increases.

### SUMMARY

One aspect of the object of the invention is to carry out efficient control of a processing device even when the boards constituting the processing device have a large numbers of devices as a result of high-densely mounting.
Besides the above object, effects that derived from the preferred embodiments to carry out the invention detailed below but that the conventional techniques do not achieve can also be regarded as objet of the present invention.

There is provided a processing device including a plurality of boards, each including a number of devices mounted thereon, and a manager that manages the plurality of boards, each of the plurality of boards including: a memory that stores procedural steps of processing to be carried out on the board; and a controller that, in response to an execution instruction from the manager, sequentially reads the procedural steps from the memory, controls the devices on the board through sequentially carrying out processing corresponding to each of the read procedural steps, and notifies a result of the carrying out the procedural steps to the manager.

Additionally, there is provided a controlling unit for a processing device including a plurality of boards each including the controlling unit and a number of devices mounted thereon, and a manager that manages the plurality of boards, the controlling unit including: a memory that stores procedural steps of processing to be carried out on the board including the controlling unit; and a controller that, in response to an execution instruction from the manager, sequentially reads the procedural steps from the memory, controls the devices on the board through sequentially carrying out processing corresponding to each of the read procedural steps, and notifies a result of the carrying out the procedural steps to the manager.
Furthermore, there is provided a method for processing in a processing device including a plurality of boards, each including a number of devices mounted thereon, and a manager that manages the plurality of boards, the method involving, at each of the plurality of boards, sequentially reading, in response to an execution instruction from the manager, procedural steps of processing to be carried out on the board from a memory; controlling the devices on the board through sequentially carrying out processing corresponding to each of the read procedural steps; and notifying a result of the carrying out the procedural steps to the manager.

According to an embodiment, even when the number of device mounted onto each boards constituting the processing device in accordance with high-densely mounting, the processing device can execute efficient control.
The object and advantages of the embodiment will be achieved and attained by means of the elements and combinations particularly pointed out in the claims.
It is to be understood that both the foregoing general description and the following detailed description are exemplary and explanatory and are not restrictive of the embodiment, as claimed.

### BRIEF DESCRIPTION OF THE DRAWINGS

Fig. 1 is a block diagram schematically illustrating the basic hardware and functional configurations of a processing device (computer system) of the embodiments;
Fig. 2 is a flow diagram illustrating a succession of procedural steps carried out in the processing device (computer system) of Fig. 1;
Fig. 3 is a block diagram schematically illustrating the basic hardware and functional configurations of a processing device (computer system) of a first embodiment;
Fig. 4 is a diagram illustrating a region of storing obtained data in a buffer (first memory);
Fig. 5 is a diagram illustrating a command list and a result comparison value list stored in a buffer (first memory);
Fig. 6 is a flow diagram illustrating a succession of procedural steps carried out in the processing device (computer system) of Fig. 3;
Fig. 7 is a block diagram schematically illustrating the main part of the basic hardware and functional configurations of a processing device (computer system) of a second embodiment;
Fig. 8 is a diagram illustrating a device control interface table stored in a buffer (first memory);
Fig. 9 is a diagram illustrating an example of a packet format common to JTAG and I2C used in the processing device (computer system) of Fig. 7;
Fig. 10 is a diagram illustrating an example of a format of control command for normal JTAG control interface;
Fig. 11 is a diagram illustrating an example of a format of control command for normal I2C control interface;
Fig. 12 is a flow diagram illustrating a succession of procedural steps carried out in the processing device (computer system) of Fig. 7;
Fig. 13 is a block diagram schematically illustrating the main part of the hardware and functional configurations of a processing device (computer system) of a third embodiment;
Fig. 14 is a diagram illustrating a number of command lists stored in a buffer (first memory, fixed region);
Fig. 15 is a flow diagram illustrating a succession of procedural steps carried out in the processing device (computer system) of Fig. 13;
Fig. 16 is a block diagram schematically illustrating the main part of the hardware and functional configurations of a processing device (computer system) of a fourth embodiment;
Fig. 17 is a flow diagram illustrating a succession of procedural steps carried out in the processing device (computer system) of Fig. 16; and
Fig. 18 is a diagram illustrating the configuration and operation of a normal computer system.

### DESCRIPTION OF THE PREFERRED EMBODIMENTS

Hereinafter, preferred embodiments will now be described with reference to accompanying drawings.
(1) basic configuration and operation:

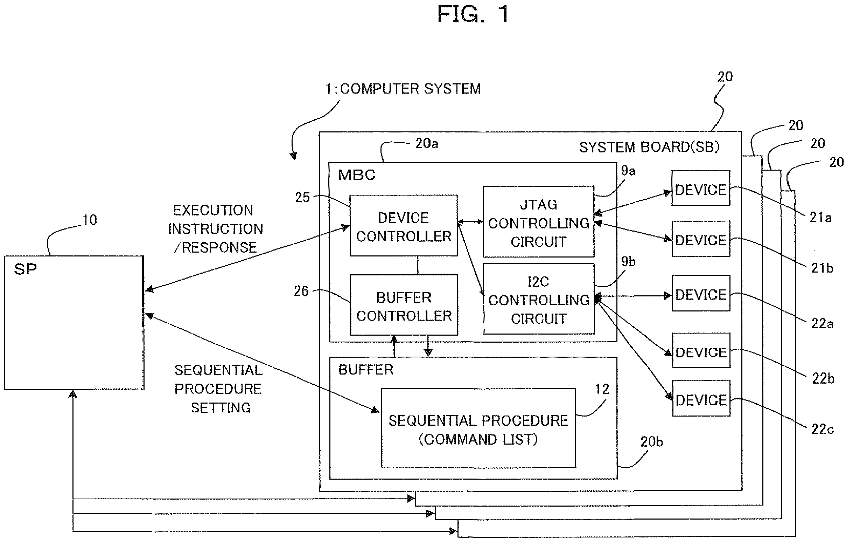

   Fig. 1 is a block diagram schematically illustrating the basic hardware and functional configurations of a computer system 1 serving as a processing device discussed herein.
The computer system 1 of Fig. 1 includes a number of system boards (SBs) 20 and a service processor (SP) 10. The SP 10 functions as a manger that manages the SBs 20. Each SB 20 includes a number of devices 21a, 21b, and 22a-22c that are to be controlled and that are mounted on the SB 20, an MBC 20a, and buffer 20b.

The buffer 20b can be referred to and updated by the SP 10 and the MBC 20a, and functions as a first memory that stores a succession of procedural steps to be sequentially carried out on the corresponding SB 20, in other words, store a command list 12 containing commands that are to be sequentially carried out on the corresponding SB 20. Into the buffer 20b, the SP 10 stores the command list 12. The buffer 20b is exemplified by a Random Access Memory (RAM), and may be included in the MBC 20a.

The command list 12 contains a number of entries. Device control data for one command is described in each of the entry. Device control data includes, for example, information to specify a device to be controlled; control command code (i.e., code that indicates the JTAG or I2C) corresponding to the control interface (I/F) scheme of the device specified by the above information; and, if the command instructs data setting, data to be set in the device.

The MBC 20a functions as a controller that, in response to an execution instruction to execute the command list 12 from the SP 10, reads commands from the command list 12 one by one, controls the devices 21a, 21b, and 22a-22c by sequentially carrying out the processing corresponding to the read commands; notifies the result of carrying out the command list 12 to the SP 10. For this purpose, the MBC 20a includes a device controller 25, a buffer controller 26, a JTAG controlling circuit 9a, and an I2C controlling circuit 9b. The function of MBC 20a is achieved by, for example, a processing function on an integrated circuit executing a predetermined program.

The computer system 1 of Fig. 1, each of the devices 21a, 21b, and 22a-22c mounted on each SB 20 is controlled via a suitable control interface scheme among a number of schemes by the device controller 25 of the MBC 20a. Examples of a control interface scheme are the JTAG control interface scheme and the I2C control interface scheme. Here, the devices 21a and 21b are arithmetic devices such as Central Processing Units (CPUs), and are connected to the JTAG controlling circuit (interface) 9a compatible with the JTAG control interface scheme, so that the devices 21a and 21b are controlled via the JTAG control interface. The devices 22a-22c are a power-aoarce control device, a memory device, and a communication device, and are connected to the I2C controlling circuit (interface) 9b compatible with the I2C control interface scheme, so that the devices 22a-22c are controlled via the I2C control interface.

The buffer controller 26 controls writing and reading data into and from the buffer 20b, and functions as a reading section that reads, in response to an execution instruction of the command list 12 from the SP 10, procedure steps (commands) from the buffer 20b (command list 12y.
The device controller 25 specifies, on the basis of each command read by the buffer controller 26, an object device that is to be controlled at the same command among the devices 21a, 21b, and 22a-22c. Furthermore, the device controller 25 selects one interface associated with the specified object device from the two interfaces 9a and 9b, and activates the selected interface 9a or 9b to carry out device control on the object device at the command. Namely, the device controller 25 functions as a command executing section.

As the above, in the computer system 1 of Fig. 1, each SB 20 includes the MBC (controller) 20a that has interfaces with devices mounted on the same SB 20 and a buffer (interface region) 20b that stores a number of processing requests being in the form of a command list 12. Furthermore, the MBC 20a has a function of sequentially carrying out a number of processes, following to the command list 12 stored in the buffer 20b. The SP 10 requests the MBC 20a of a particular SB 20 to carry out the processes by providing the command list 12 collectively indicating the processes to the MBC 20a. The MBC 20a is configured to, upon receipt of the request, sequentially carry out the processes indicated in the command list 12, and after the completion of all the processing, notify the result of the carrying out the processes to the SP 10.

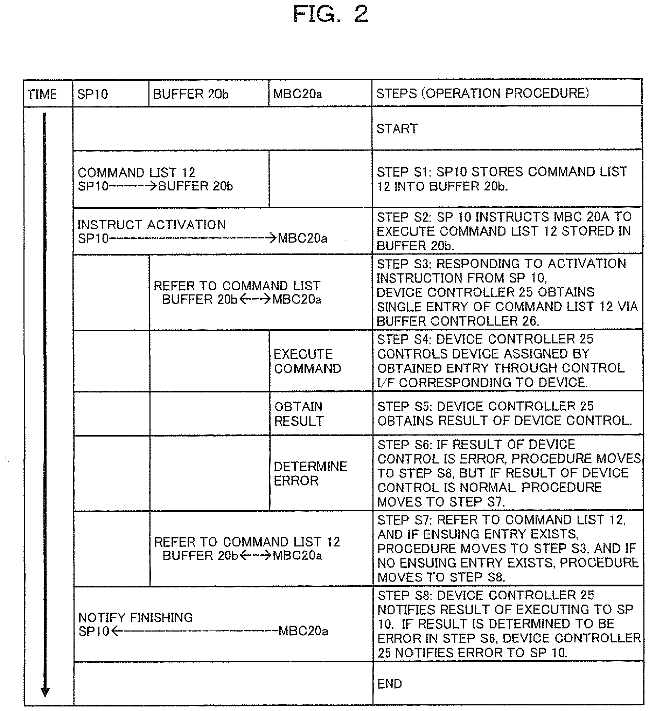

Next, description will now be made in relation to operation of the computer system of Fig. 1 with reference to a flow diagram (steps S1-S8) of Fig. 2.
When the SP 10 is to perform device control on a particular SB 20 in the computer system 1 of Fig. 1, the SP 10 prepares a command list indicating a series of control instructions, and stores the command list in the buffer 20b of the SB 20 to be controlled (step S1). In detail, the SP10 stores the command list 12 through the MBC 20a (i.e., the device controller 25 and the buffer controller 26) into the buffer 20b.

After the command list 12 sent from the SP 10 is stored into the buffer 20b, the SP 10 instructs the MBC 20a of the particular SB 20 to activate and execute the command list 12 stored in the buffer 20b (step S2). Upon receipt of the instruction, the MBC 20a obtains an entry, that is a single command, from the command list 12 stored in the buffer 20b through the buffer controller 26 (step S3). Then the device controller 25 of the MBC 20a activates the control circuit 9a or 9b associated as the control interface with an object device that is to be controlled and that is indicated by the obtained entry, carries out device control based on a control command and setting data included in the obtained entry (step S4), and obtains the result of the controlling of the device (step S5).

The MBC 20a determines whether the result of the device control is normal (correct) or error (step S6). If the result is normal, the MBC 20a refers to the command list 12, and if an ensuing entry exists, the procedure returns to Step S3 while if no ensuing entry exists, the procedure moves to step S8 (step S7). In contrast, if the result is error, the MBC 20a aborts the execution of the command list 12 and the procedure immediately moves to step S8 (step S6).

In step S8, the device controller 25 of the MBC 20a notifies the result of the executing the command list 12 to the SP 10. Specifically, if control following all the entries in the command list 12 is normally completed, the device controller 25 of the MBC 20a responds to the SP 10 with a notification of normal completion. On the other hand, if control at one of the commands in the command list 12 results in error, the device controller 25 immediately aborts the processing and notifies error (abnormality) to the SP 10.

The computer system 1 of Fig. 1 defines a command list 12 containing entries arranged according to the order of device control based on the type of the SB 20 to be controlled, and stores the command list 12 into the buffer 20b of the same SB 20. Thereby, the SP 10 issues instructions of controlling individual devices to a particular SB 20 in a lump, so that it is possible to greatly reduce load of issuing commands and confirming the result of the control for each SB 20 on the SP 10. Reducing load of each SB 20 on the SP 10 makes it possible to greatly reduce time that the SP 10 takes to control a variety of SBs 20 and/or devices.

For example, if the command list 12 contains 100 entries, which means 100 commands to be sequentially carried out, the conventional scheme of Fig. 18 carries out instruction from the SP to an MBC and confirmation of the result of control at the commands each 100 times. Conversely, in the computer system 1 of Fig. 1, it is sufficient that storing of the command list 12 into the buffer 20b, instructing the MBC 20a to execute the command list 12, and confirming the result of the command list 12 are each carried out only once.

Accordingly, even if the number of devices to be mounted on each SB 20 constituting the computer system 1 increases in accordance with high-densely mounting, the computer system 1 of Fig. 1 can greatly reduce the load on the SP 10 and efficient control can be achieved in the computer system 1. In other words, even if the number of devices to be controlled by the SP 10 increases in the high-densely mounted computer system 1, this configuration makes it possible to rapidly start up the computer system 1 and reduce the load of monitoring the devices, which consequently achieves efficient system control.

### (2) first embodiment:

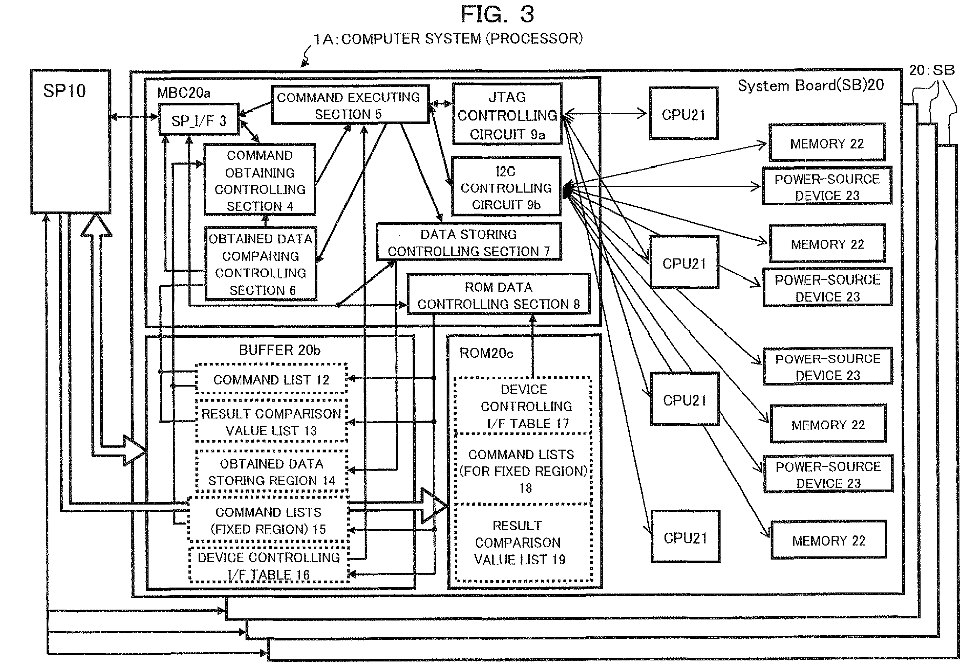

Fig. 3 is a block diagram illustrating the hardware configuration and the functional configuration of a computer system (processing device) 1A according to the first embodiment.
Likewise the computer system 1 of Fig. 1, the computer system 1A of Fig. 3 includes a number of SBs 20 and the SP 10. The SP 10 functions as a manger that manages the SBs 20. Each SB 20 includes a number of devices 21-23 that are mounted on the SB 20 and that are to be controlled, an MBC 20a, a buffer 20b, and a Read Only Memory (ROM) 20c.

The SP 10 is an independent controlling unit that carries out system control on the computer system 1A consisting of a number of SBs 20, and includes a number of communication routes, one dedicated to the MBC 20a of each of the SBs 20. The device control carried out by the SP 10 includes instructing control execution on the respective devices 21-23 and obtaining information from the devices 21-23. For example, in initiation of the computer system 1, the SP 10, in addition to the instruction, confirms whether each device is in an expected state so that the device is determined to be in a normal or abnormal state after the instruction. If abnormality is detected, the SP 10 aborts the operation. For detection of the presence of abnormality of the respective devices 21-23, the device control by the SP 10 includes a function of periodically reading the state of each SB 20 and determining the SB 20 to be in a normal or abnormal state. The computer system 1A of the first embodiment is configured such that the SP 10 issues the instruction of the device control including a number of procedures to a particular SB 20 in a lump.

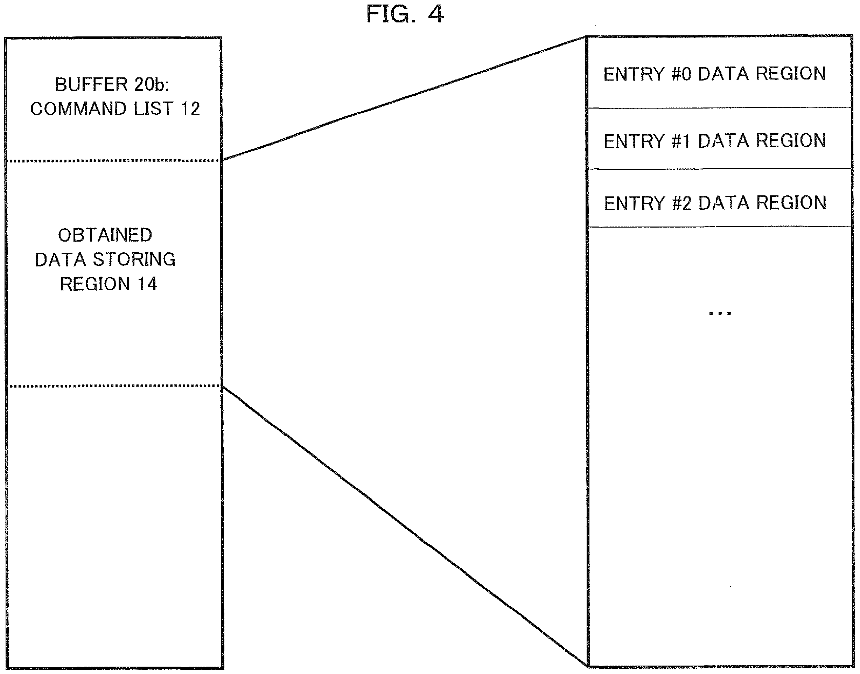

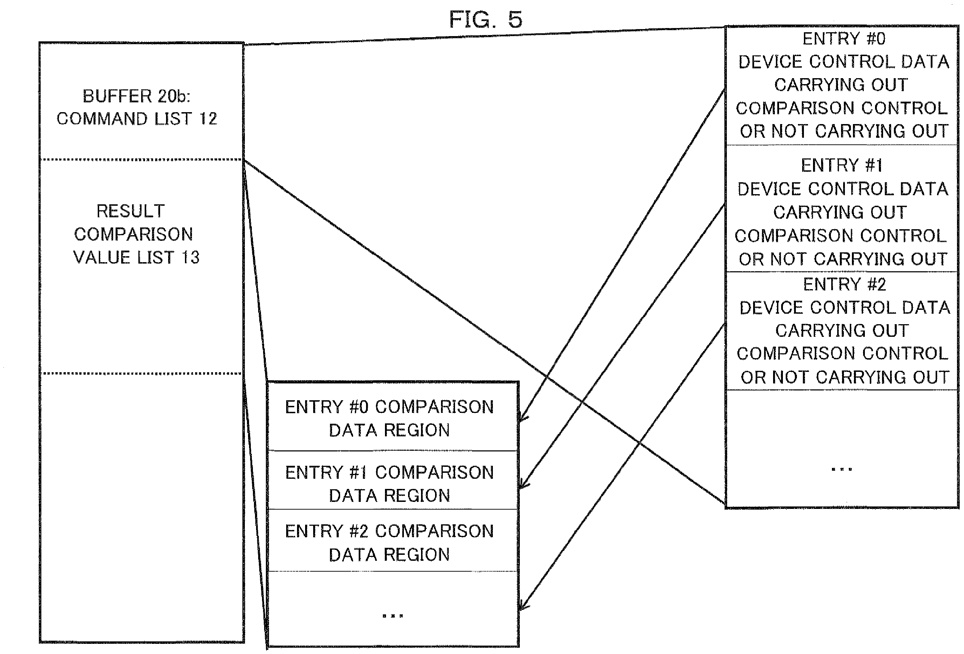

The buffer 20b can be referred to and updated by the SP 10 and the MBC 20a, and functions as a first memory that stores a command list 12 received from the SP 10. For this purpose, the buffer 20b secures an interface region that stores the command list 12 from the SP 10. The buffer 20b also secures a region to store a result comparison value list 13 from the SP 10 or the ROM 20c and an obtained data storing region 14. The result comparison value list 13 includes comparison data (see Fig. 5) to be compared with a result of executing commands in an obtained data comparing controlling section 6, which will be detailed below. The obtained data storing region 14 stores data obtained from the devices 21-23 through execution of processing corresponding to the command sequence on the corresponding SB 20 (see Fig. 4). Furthermore, the buffer 20b secures a fixed region to store command lists 15 from the SP 10 or the ROM 20c and a region to store a device controlling interface table 16 from the SP 10 or the ROM 20c. The first embodiment uses the command list 12, the result comparison value list 13, and the obtained data storing region 14. The command lists (fixed region) 15 and the device controlling interface table 16 will be detailed in the following second through the fourth embodiment. The buffer 20b may be included in the MBC 20a.

The ROM 20c may secure regions to store a device controlling interface table (ROM) 17, command lists (for a fixed region) 18, and a result comparison value list (ROM) 19. If the computer system 1A carries out the device control using either of the device controlling interface table 17, the command lists 18, and the result comparison value list 19, the table and/or the list to be used are stored into the ROM 20c when the SB 20 is being manufactured. The device controlling interface table (ROM) 17 is to be stored as a device controlling interface table 16 in the buffer 20b, and will be detailed in the second embodiment. The command lists 18 are to be stored into the fixed region 15 of the buffer 20b, and will be detailed in the fourth embodiment. The result comparison value list 19 is to be stored as the result comparison value list 13 in the buffer 20b, and may be used in the first embodiment as detailed below. The ROM 20c may be included in the MBC 20a.

The MBC 20a functions as a controller that, in response to an execution instruction of the command list 12 from the SP 10, sequentially reads the respective commands from the command list 12; controls the devices 21-23 by sequentially executing processing corresponding to the read commands on the corresponding SB 20; and notifies the result of executing the command list 12 to the SP 10. For this function, the MBC 20a includes an SP interface 3, a command obtaining controlling section 4, a command executing section 5, an obtained data comparing controlling section 6, a data storing controlling section 7, a ROM data controlling section 8, a JTAG controlling circuit 9a, and an I2C controlling circuit 9b. The function of the MBC 20a is achieved by, for example, a processing function on an integrated circuit executing a predetermine program.

In the computer system 1A of Fig. 3, each of the devices 21-23 mounted on the each SB 20 is controlled by the command executing section 5 of the MBC 20a via one of control interface schemes. Likewise the computer system 1 described above, the first to the fourth embodiments assume to adopt two interface schemes of the JTAG control interface scheme and the I2C control interface scheme. The device 21 is a CPU and is connected to the JTAG controlling circuit 9a compatible with the JTAG control interface scheme, so that the device 21 is controlled via the JTAG control interface. The devices 22 and 23 are a memory device and a power-source device, respectively, and are connected to the I2C controlling circuit 9b compatible with the I2C control interface scheme, so that the devices 22 and 23 are controlled via the I2C control interface.

The SP interface 3 communicates with the SP 10 through a communication line dedicated to communication between the SP 10 and the MBC 20a.
The command obtaining controlling section 4, corresponding to the buffer controller 26 of the system 1 described above, controls writing and reading data into and from the buffer 20b, and functions as a reading section that sequentially reads, in response to an execution instruction from the SP 10, commands from the command list 12 one by one.

The command executing section 5 specifies, on the basis of each of the read commands by the command obtaining controlling section 4, an object device to be controlled at the commands among the devices 21-23. In addition, the command executing section 5 selects an interface associated with the specified object device from two interface circuits 9a and 9b, activates the selected interface circuit 9a or 9b, and carries out device control on the specified object at the same command.

The obtained data comparing controlling section 6 reads the command list 12 and the result comparison value list 13 stored in the buffer 20b, and carries out the following comparison control. The result comparison value list 13 stores comparison data to be detailed below in which each entry of the command list 12 is associated with one of the pieces of the comparison data as illustrated in Fig. 5. In the computer system 1A of the first embodiment, a flag is set for each command of the command list 12 which flag indicates whether the result of execution of each command is to be compared. As depicted in Fig. 5, data for each entry #n (n=0, 1, 2,...) includes information in the form of the flag as to whether the result of the corresponding command is to be compared (i.e. whether "comparison control" is to be carried out or not) along with device control data at each command as detailed above. If a flag of carrying out the comparison control is to be carried out is set, the corresponding entry #n is linked to a region to store comparison data to be compared with the result of executing the command of the same entry #n in one-by-one correspondence as depicted in Fig. 5. If the flag associated with a command read from the command list 12 indicates that the result of executing the command is to be compared (if the comparison control is to be carried out), the obtained data comparing controlling section 6 functions as a comparing section that compares the result of executing a command and the comparison data linked to the same command in the result comparison value list 13. The MBC 20a (the command executing section 5) is configured to continuously carry out, if the result of the comparing by the obtained data comparing controlling section 6 is acceptable, the processing at the subsequent commands in the command list 12. On the other hand, the MBC 20a is configured to notify, if the result of the comparing by the obtained data comparing controlling section 6 is not acceptable, the error to the SP 10 through the SP interface 3 and concurrently abort the execution of the command list 12. Here, Fig. 5 is a diagram illustrating the command list 12 and the result comparison value list 13 stored in the buffer 20b.

The data storing controlling section 7 writes data obtained through carrying out processing associated with the command sequence on the corresponding SB 20 into the obtained data storing region 14 secured on the buffer 20b. As depicted in Fig. 4, the obtained data storing region 14 stores data obtained through the processing associated with the command of the entry #n into the data region secured for the entry #n. The MBC 20a is configured to notify, upon completion of the processing the command sequence of the command list 12, the completion of the processing to the SP 10. In response to the completion notification from the MBC 20a, the SP 10 reads the obtained data from the obtained data storing region 14 of the buffer 20b. Fig. 4 depicts the obtained data storing region 14 of the buffer 20b.

The ROM data controlling section 8 expands, in response to an expansion instruction from the SP 10, data from the ROM 20c into the buffer 20b. In the computer system 1A of the first embodiment, the ROM data controlling section 8 functions as a list expanding section that expands, in response to an expansion instruction that the SP 10 issues when the computer system 1A is powered on or when an additional SB 20 is mounted, the result comparison value list 19 stored in the ROM 20c, as the result comparison value list 13, into the buffer 20b. In a computer system 1B of the second embodiment, the ROM data controlling section 8 functions as a table expanding section that expands, in response to an expansion instruction that the SP 10 issues when the computer system 1A is powered on or when an additional SB 20 is mounted, the device controlling interface table 17 stored in the ROM 20c, as the device controlling interface table 16, into the buffer 20b. Furthermore, in the computer system 1D of the fourth embodiment, the ROM data controlling section 8 functions as a list expanding section that expands, in response to an expansion instruction that the SP 10 issues when the computer system 1A is powered on or when an additional SB 20 is mounted, the command lists 18 stored in the ROM 20c, as the command lists 15, into the buffer 20b.

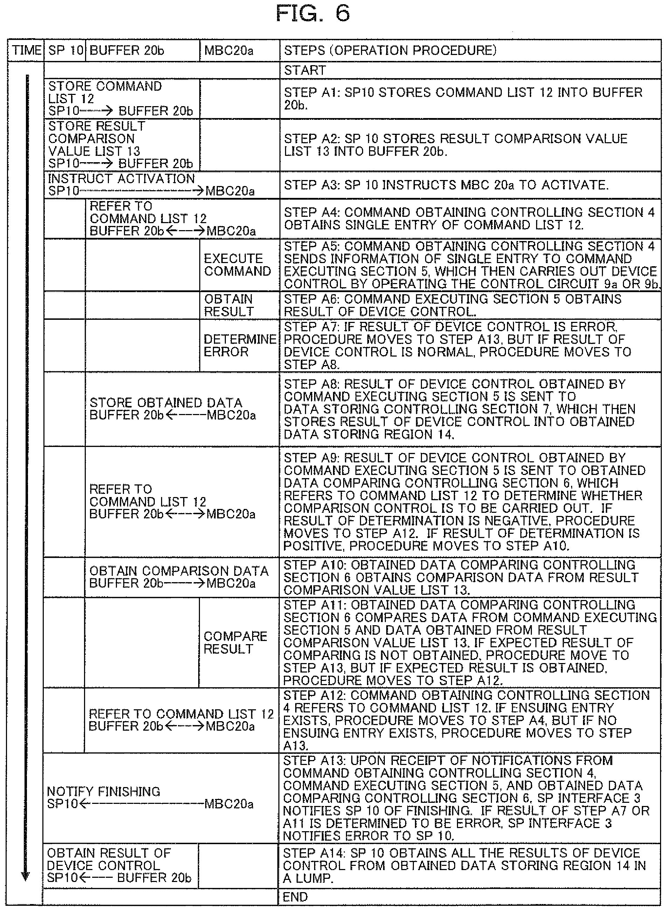

Next, the operation of the computer system 1A of Fig. 3 will now be described with reference to a flow diagram (steps A1 to A14) of Fig. 6.
When the SP 10 is to carry out device control on a particular SB 20 in the computer system 1A of Fig. 3, the SP 10 first prepares a series of control instructions in the form of a command list and stores the command list in the buffer 20b of the SB 20 to be controlled in advance (step A1). The SP 10 specifically stores the command list 12 into the buffer 20b through the MBC 20a (e.g., the SP interface 3) of the SB 20 to be controlled.

The SP 10 also prepares result comparison value list 13 and previously stores the result comparison value list 13 in the buffer 20b of the SB 20 to be controlled (step A2). Specifically, the SP 10 stores the result comparison value list 13 into the buffer 20b through the MBC 20a (e.g., the SP interface 3) of the SB 20 to be controlled. Alternatively, the result comparison value list 19 may be previously stored in the ROM 20c when the SB 20 is being manufactured in the computer system 1A of the first embodiment. In this case, when the computer system 1A is powered on or when an additional SB 20 is mounted, the ROM data controlling section 8 receives a list expansion instruction from the SP 10 and expands the result comparison value list 19 stored in the ROM 20c, as the result comparison value list 13, into the buffer 20b. This configuration makes the SP 10 possible to carry out the comparison control irrespective of the configuration of each SB 20 and of the interface schemes of the respective devices simply by storing the result comparison value list 19 in the ROM 20c of the SB 20 and expanding the list 19, as the result comparison value list 13, into the buffer 20b of the same SB 20.

After that, the SP 10 issues, to the MBC 20a of the particular SB 20, an execution instruction and the moving instruction of the command list 12 stored in the buffer 20b. Upon receipt of the instructions, the SP interface 3 activates the command obtaining controlling section 4 (step A3). The command obtaining controlling section 4 obtains a single entry, that is, a single command, from the command list 12 stored in the buffer 20b, and sends to the entry to the command executing section 5 (step A4). Then the command executing section 5 refers to the received entry, specifies an object device to be controlled among the devices 21-23 on the SB 20, determines a control circuit associated with the control interface of the specified object device, and activates the associated control circuit 9a or 9b. This accomplishes the device control based on a control command or setting data (step A5).

Upon receipt of the result of the device control (step A6), the command executing section 5 determines whether the result of the control of the object device is normal or error (step A7). If the result of the control is error, the MBC 20a aborts the execution of the command list 12 and immediately moves the procedure to step A13, in which SP interface 3 notifies entry error, along with the entry number related to the command of execution error, to the SP 10.

On the other hand, if the result of the control is normal, the command executing section 5 sends the obtained result of the device control to the data storing controlling section 7, which then stores the result of the device control to a region corresponding to the obtained data storing region 14 depicted in Fig. 4 (step A8).
Furthermore, the data obtained as the result of the device control by the command executing section 5 is sent to the obtained data comparing controlling section 6, which refers to the flag set for the corresponding command the command list 12 to determine whether comparison control is to be carried out (step A9). If the flag of carrying out comparison control is not set, the MBC 20a moves the procedure to step A12.

On the other hand, if the flag of carrying out comparison control is set, the obtained data comparing controlling section 6 obtains comparison data from a region corresponding to the entry in question of the result comparison value list 13 (step A10), and compares the obtained comparison data with the data obtained as the result of the device control (step A11).
An expected result of the comparison by the obtained data comparing controlling section 6 is not obtained, the MBC 20a aborts the execution of the command list 12 and immediately moves the procedure to step A13, in which the SP interface 3 notifies entry error, along with the entry number related to the command of execution error, to the SP 10.

If an expected result of the comparison is obtained, the obtained data comparing controlling section 6 activates the command obtaining controlling section 4, which then refers to the command list 12. If an ensuing entry exists in the command list 12, the procedure returns to step A4 and the above process are repeated again. Conversely, if no ensuing entry exists in the command list 12, that is, when all the entries in the command list 12 are completed, the MBC 20a moves the procedure to step A13 (step A12). Upon receipt of notification of completion of processing of all the entries, the SP interface 3 notifies normal completion to the SP 10 (step A13).

Upon receipt of the notification of normal completion, the SP 10 recalls the obtained data storing region 14 of the buffer 20b to obtain data related to the result of executing the command list 12 from the buffer 20b in a lump. Conversely, if the MBC 20a finishes the processing of the command list 12 due to error, the SP 10 determines only the data of the result of the processing entries previous to the entry number notified as the execution error to be effective data and obtains the data determined to be effective from the obtained data storing region 14 (step A14). Then the SP 10 determines whether the data obtained from the obtained data storing region 14 is acceptable.

As the above, the computer system 1A of the first embodiment instructs execution of a number of commands on the command list 12 stored in the buffer 20b in the same manner as the computer system 1. In addition to the execution instruction, the computer system 1A determines, on the basis of the flag indicating whether the comparison control is to be carried out and the comparison of the result of the device control using the result comparison value list 13, whether the processing of the command list 12 is to be continued, and stores the result of the device control into the obtained data storing region 14.

Thereby, the SP 10 can carry out device control on the devices by issuing a single execution instruction to MBC 20a of each SB 20 and also can obtain information from the devices of each SB 20 by receiving a single finishing notification from the MBC 20a. Accordingly, likewise the computer system 1 of Fig. 1, even if the number of devices to be controlled by the SP 10 is increased in the high-densely mounted computer system 1A, this configuration can reduce the time for starting up the computer system 1A and concurrently can reduce the load of monitoring devices. It is therefore possible to achieve efficient system control with a small load of controlling the system.

In particular, the computer system 1A of the first embodiment prepares the obtained data storing region 14 in the buffer 20b, and stores information obtained through execution of the command list 12 into the obtained data storing region 14 as demanded. After completion of the execution of the entire command list 12, the SP 10 can obtain the information stored in the buffer 20b in a lump. This configuration makes the SP 10 possible to instruct to obtain information from the entire hardware at a time. Such a function of obtaining information is effectively used if, for example, the SP 10 has a function (periodic monitoring function) of monitoring the operation state of the devices of the respective SBs 20 at predetermined intervals. This period monitoring function reads, for example, operation state values such as an output voltage value, a temperature, a fan speed, and a pressure from the power-source device 23, and determines whether each of read operation state values is within an acceptable range or indicates an abnormal state.

In the computer system 1A of the first embodiment, the result comparison value list 13 linked to the command list 12 is prepared in the buffer 20b, and a piece of comparison data, corresponding to each entry, in the result comparison value list 13 can be compared with the result of executing the command corresponding to the entry. Thereby, the SP 10 can examine the information obtained from the respective devices 21-23 through collectively instructing using the command list 12 in a lump.

The device control sometimes determines, on the basis of the state of devices, whether or not the processing is to be continued. For example, if initiation of a device is instructed and setting of the device is determined after the initiation, the state of the device is read and, on the basis of the read sate, whether the initiation of the device is normally completed is determined. In this case, since the SP 10 refers to information on the state of the device and determines whether the processing is to be continued, the command list 12 is divided at the determination.

For the above, the computer system 1A of the first embodiment sets, in the MBC 20a in each SB 20, a flag indicating whether comparison control is to be carried out for each entry of the command list 12, and prepares, in the buffer 20b, the result comparison value list 13. On the basis of the flag and the list 13, the obtained data comparing controlling section 6 determines whether the execution of the command list 12 is to be continued. This configuration can eliminate the division of command list 12 and can largely widen the range of instructions accomplished in a lump simply using a single command list 12.

### (3) second embodiment:

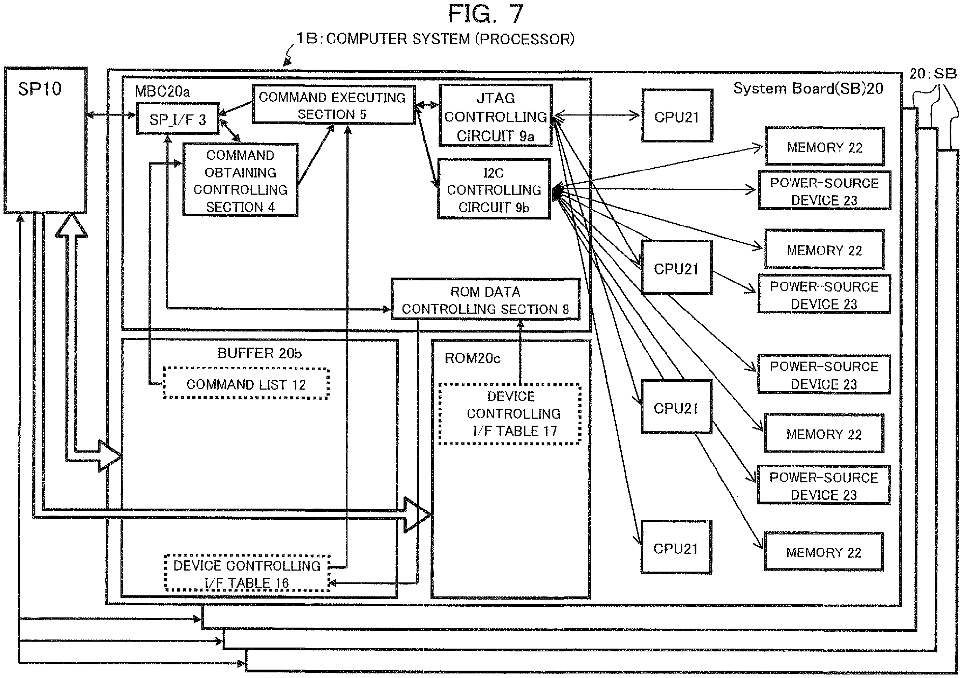

Fig. 7 is a block diagram illustrating the hardware configuration and the functional configuration of a computer system (processing device) 1B according to the second embodiment.
The computer system 1B of Fig. 7 has a similar configuration to that of the computer system 1A of Fig. 3, and parts and elements assigned by the same reference number as those of Fig. 3 represent the same or substantially the same parts and elements, so detailed description is omitted here.

The MBC 20a of the computer system 1B includes the SP interface 3, the command obtaining controlling section 4, the command executing section 5, the ROM data controlling section 8, and the control circuit 9a and 9b the same as the first embodiment, but omits the obtained data comparing controlling section 6 and the data storing controlling section 7. The buffer 20b of the computer system 1B includes the command list 12 and the device controlling interface table 16, but omits the result comparison value list 13, the obtained data storing region 14, and the command lists 15.
Furthermore, the ROM 20c of the computer system 1B includes the device controlling interface table 17, but omits the command lists 18 and the result comparison value list 19.

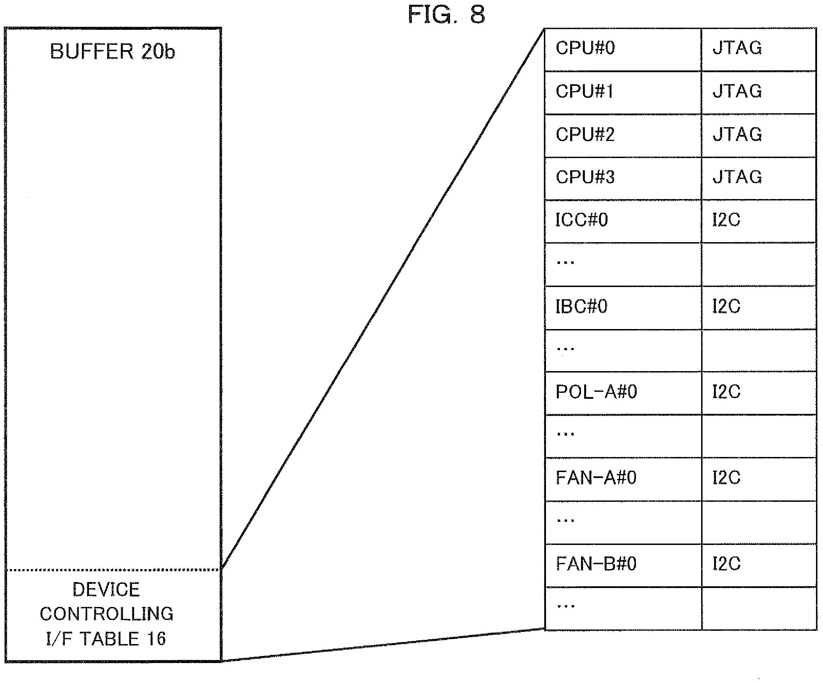

The computer system 1B of the second embodiment arranges the device controlling interface table 16 (see Fig. 8), along with the command list 12 the same as that of the first embodiment, in the buffer 20b. Arranging the device controlling interface table 16 in the buffer 20b makes the MBC 20a (the command executing section 5) possible to refer to the device controlling interface table 16. The device controlling interface table 16 is arranged and stored into the buffer 20b by the SP 10 upon the computer system 1B is started up or when the SP 10 recognizes mounting of an additional SB 20.

The device controlling interface table 16 stores, as illustrated in Fig. 8, association of each of the devices 21-23 mounted onto the SB 20 with the type of corresponding control interface (i.e., control circuit 9a or 9b). In the device controlling interface table 16 of Fig. 8, the CPU#0 through CPU#4 corresponding to the device 21 are associated with JTAG (control circuit 9a); the ICC#0, ..., IBC#0, ..., POL-A#0, ..., FAN-A#0, ..., FAN-B#0, ... corresponding to the devices 22 and 23 are associated with I2C (control circuit 9b). Fig. 8 is a diagram depicting the device controlling interface table 16 stored in the buffer 20b.

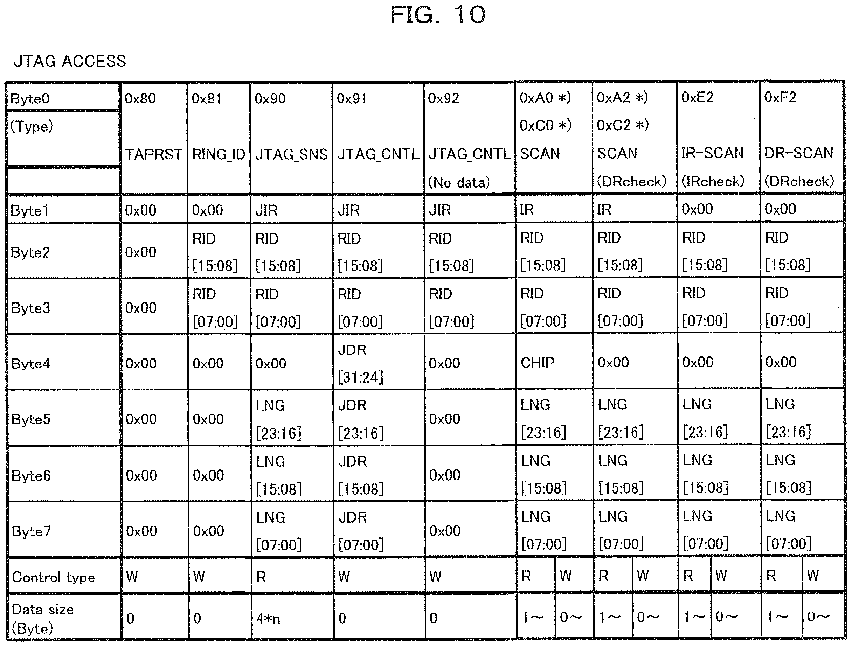

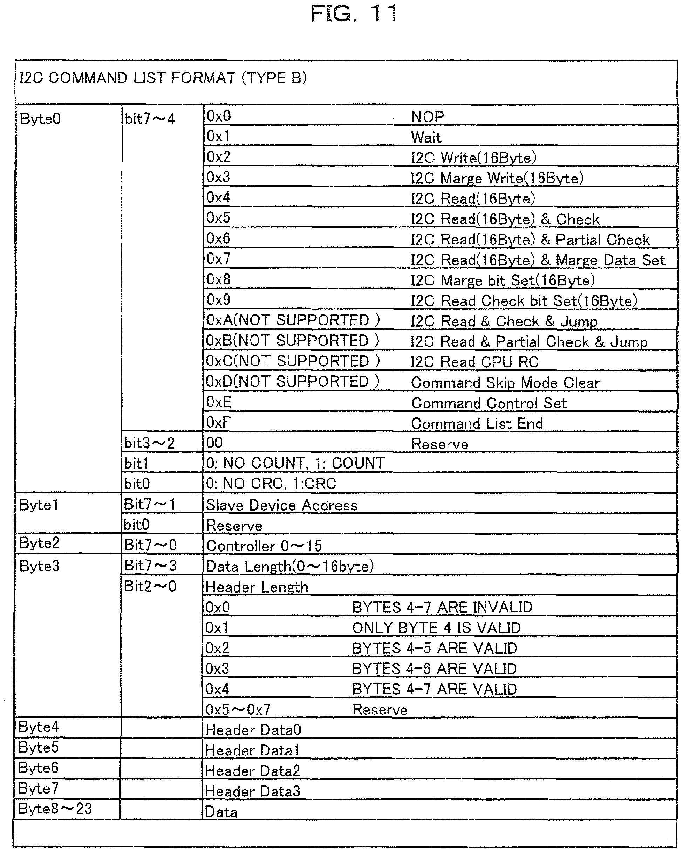

The control circuits 9a and 9b that control the devices 21-23 on the SB 20 each include dedicated registers (not illustrated) in an MBC 20a, and sets a value corresponding to the contents of device control to be carried out in each register, so that the device control associated with the value is carried out. A control command for a JTAG control interface has a format as depicted in Fig. 10, that contains, for example, an access manner of the JTAG circuit, instruction to an object device to be controlled, selecting information for the object device, and assignation of data to be set or read. Also a control command for an I2C control interface has a format similar to that for JTAG, i.e., the format of, for example, Fig. 11. However, differently from a register dedicated to the JTAG, the configuration of a register dedicated to the I2C in the MBC 20a causes the SP 10 to prepare data (command) corresponding to the format of the register and to send the data to the MBC 20a to request the execution of the command. Fig. 10 illustrates an example of a format of a control command for a normal JTAG control interface; and Fig. 11 illustrates an example of a format of a control command for a normal I2C control interface.

In the computer system 1B of the second embodiment, upon specifying an object device to be controlled on the basis of a command read from the command list 12, the command executing section 5 selects a control circuit associated with the specified object device between the control circuits 9a and 9b with reference to the device controlling interface table 16 stored in the buffer 20b. Then the command executing section 5 generates control information having a format compatible with the selected control circuit 9a or 9b, and on the basis of the generated control information, controls the object device via the selected control circuit 9a or 9b.

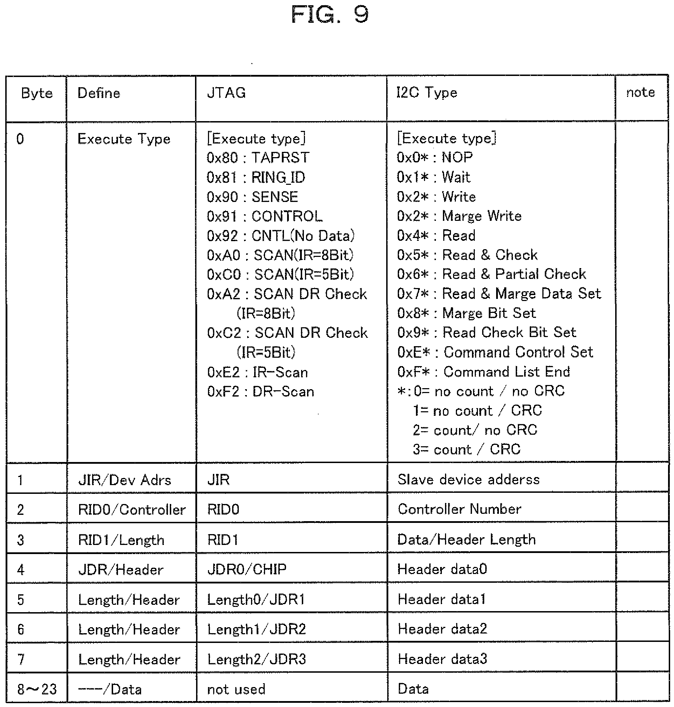

In the device control, the SP 10 of the second embodiment unifies command packet formats, prepared one for each of kinds of device control interface, into a 24-byte format as illustrated in Fig. 9. The command list 12 consisting of commands for JTAG and I2C having the unified format is stored into the buffer 20b. Each entry (i.e., a command having a unified format) of the command list 12 includes selecting information of object devices 21-23 to be controlled and information related to instruction, setting, and information obtaining to each object device, and are common to JTAG and I2C. If the different kinds of control interface scheme have a register difference, each entry (command) is configured so as to include the register difference.

The command executing section 5 determines, with reference to the command read from the command obtaining controlling section 4 and the device controlling interface table 16, whether the control interface scheme of an object device is JTAG or I2C. In addition, on the basis of the contents of the read command, the command executing section 5 generates control information in the format compatible with the determined control interface scheme, and executes device control on the object device. Thereby, the SP 10 can accomplish the device control through the JTAG and I2G control interface schemes simply by preparing the command list 12 having unified formats as illustrated in Fig. 9. Fig. 9 illustrates a packet format common to the JTAG and I2C used in the computer system 1B.

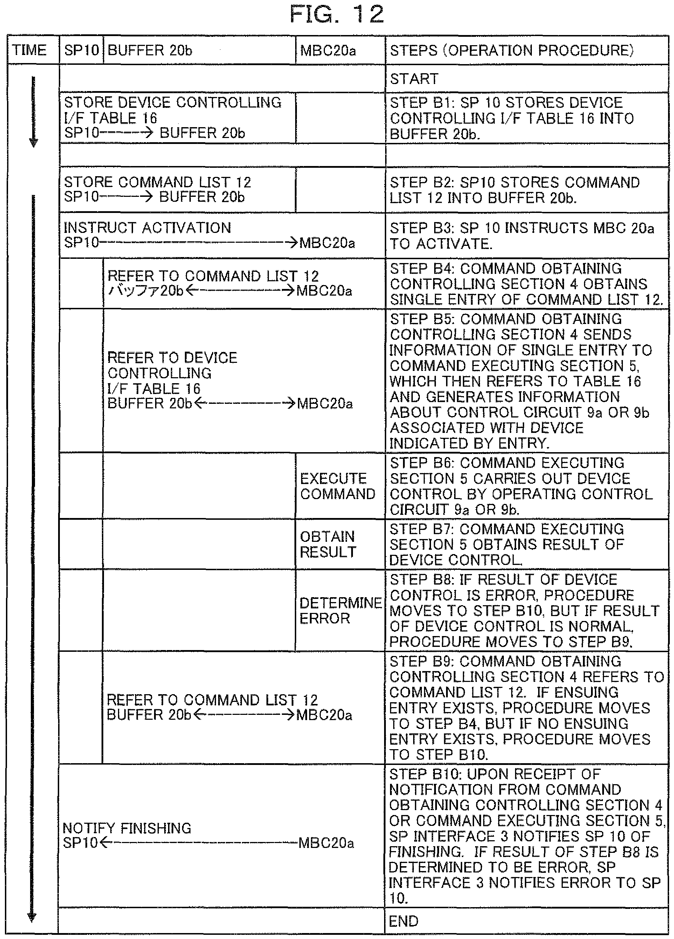

Next, the operation of the computer system 1B of Fig. 7 is described with reference to a flow diagram (steps B1-B10) of Fig. 12.
In the computer system 1B of the second embodiment, when the computer system 1B is powered on or when an additional SB 20 is mounted, the device controlling interface table 16 is stored in the buffer 20b (step B1). In other words, the device controlling interface table 16 is stored not in synchronization with the start of the device control.

When the SP 10 is to execute device control on a particular SB 20, the SP 10 prepares a command list contains a series of control instructions and stores the command list into the buffer 20b of the SB 20 to be controlled (step B2). At that time, the SP 10 stores the command list 12 into the buffer 20b through the MBC 20a (e.g., the SP interface 3) of the SB 20 to be controlled.

Then, the SP 10 instructs the MBC 20a of the SB 20 to be controlled to activate and execute the command list 12 stored in the buffer 20b (step B3). Upon receipt of the instruction, the SP interface 3 activates the command obtaining controlling section 4. The command obtaining controlling section 4 obtains a single entry, i.e., a single command, from the command list 12 stored in the buffer 20b (step B4) and sends the entry to the command executing section 5, which then selects a control circuit associated with the object device to be controlled between the control circuit 9a and 9b with reference to the received entry and the device controlling interface table 16, and generates the control information having a format compatible with the selected control circuit 9a or 9b (step B5). The command executing section 5 issues an instruction to the selected control circuit 9a or 9b and operates the control circuit 9a or 9b, so that the object device is controlled on the basis of the generated control information (step B6). In setting the registers dedicated to a control circuit in the MBC 20a on the basis of the command list 12, an object register and data to be used may be determined on the basis of the device controlling interface table 16.

Upon receipt of the result of the device control (step B7), the command executing section 5 determines whether the result of the device control is normal or error (step B8). If the result of the device control is error, the MBC 20a aborts the execution of the command list 12 and immediately moves the procedure to the step B10, in which SP interface 3 notifies entry error, along with the entry number related to the command of execution error, to the SP 10.

On the other hand, if the result of the device control is normal, the command executing section 5 activates the command obtaining controlling section 4, which refers to the command list 12 to confirm the presence of an ensuing entry. If the ensuing entry exists, the command obtaining controlling section 4 returns the procedure to step B4 and repeats the above procedure again. If no ensuing entry exists, that is, if processing of all the entries on the command list 12 is completed, the MBC 20a moves the procedure to step B10 (step B9). Upon receipt of the notification that the processing of all the entries is completed, the SP interface 3 notifies the normal completion to the SP 10 (step B10).

Accordingly, likewise the computer system 1 of Fig. 1, even if the number of devices to be controlled by the SP 10 is increased in the high-densely mounted computer system 1B of the second embodiment, this configuration can reduce the time for starting up the computer system 1B and concurrently can reduce the load of monitoring devices. It is therefore possible to achieve efficient system control with a small load of controlling the system.

Furthermore, preparation of the device controlling interface table 16 can eliminate storing information of the command list 12 in the formats compatible with the control interface schemes of the respective devices. Therefore, the data that the SP 10 stores can be managed in the form of a unified command list of Fig. 9, the management by the SP 10 is further simplified, so that more efficient system control with reduced amount of load of control can be achieved.

In the computer system 1B of the second embodiment, the device controlling interface table 17 may be stored in a ROM (third memory) in advance, for example, when the SB 20 is being manufactured. In this case, when the computer system 1B is powered on or when an additional SB 20 is mounted, a ROM data controlling section (table expanding section) 8 expands, in response to a table expansion instruction from the SP 10, the device controlling interface table 17 stored in the ROM 20c, as the device controlling interface table 16, into the buffer 20b. This configuration makes the SP 10 possible to execute device control irrespective of the configuration of each SB 20 and the control interface scheme of each device simply by storing the device controlling interface table 17 in the ROM 20c of each SB 20 and expanding the device controlling interface table 17, as the device controlling interface table 16, into the buffer 20b. Consequently, the management by the SP 10 is further simplified to contribute to enhancing the efficiency of system control.

### (4) third embodiment:

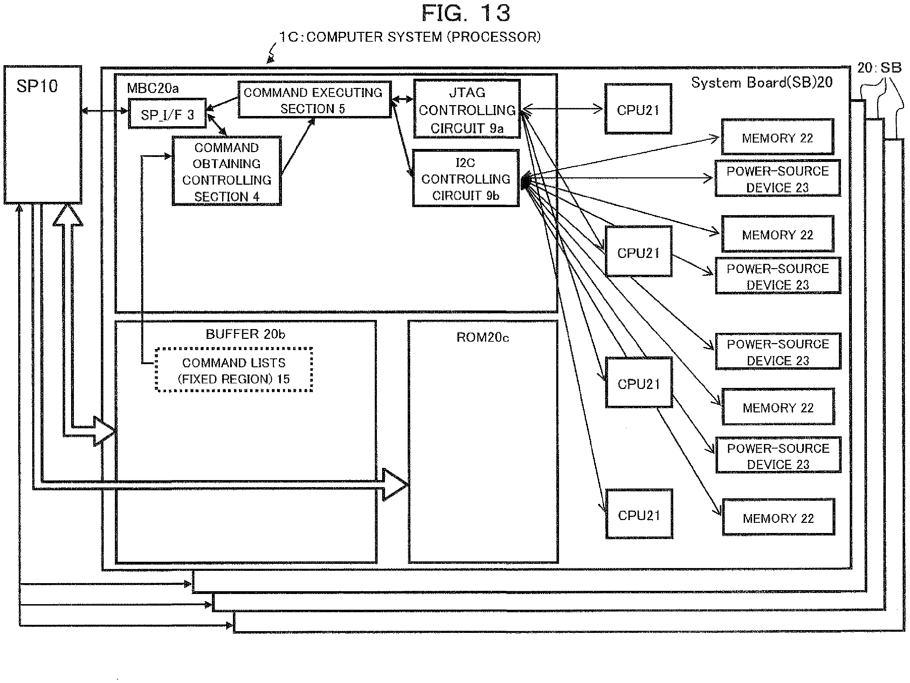

Fig. 13 is a block diagram illustrating the main part of the hardware configuration and the functional configuration of a computer system (processing device) 1C according to the third embodiment.
The computer system 1C of Fig. 13 has a similar configuration to that of the computer system 1A of Fig. 3, and parts and elements assigned by the same reference number as those of Fig. 3 represent the same or substantially the same parts and element, so detailed description is omitted here.

The MBC 20a of the computer system 1C includes the SP interface 3, the command obtaining controlling section 4, the command executing section 5, and the control circuit 9a and 9b the same as the first embodiment, but omits the obtained data comparing controlling section 6, the data storing controlling section 7, and the ROM data controlling section 8. The buffer 20b of the computer system 1C includes the command lists 15 of a fixed region, but omits the command list 12, the result comparison value list 13, the obtained data storing region 14, and the device controlling interface table 16. Furthermore, the ROM 20c of the computer system 1C omits the device controlling interface table 17, the command lists 18, and the result comparison value list 19 described with reference to Fig. 3.

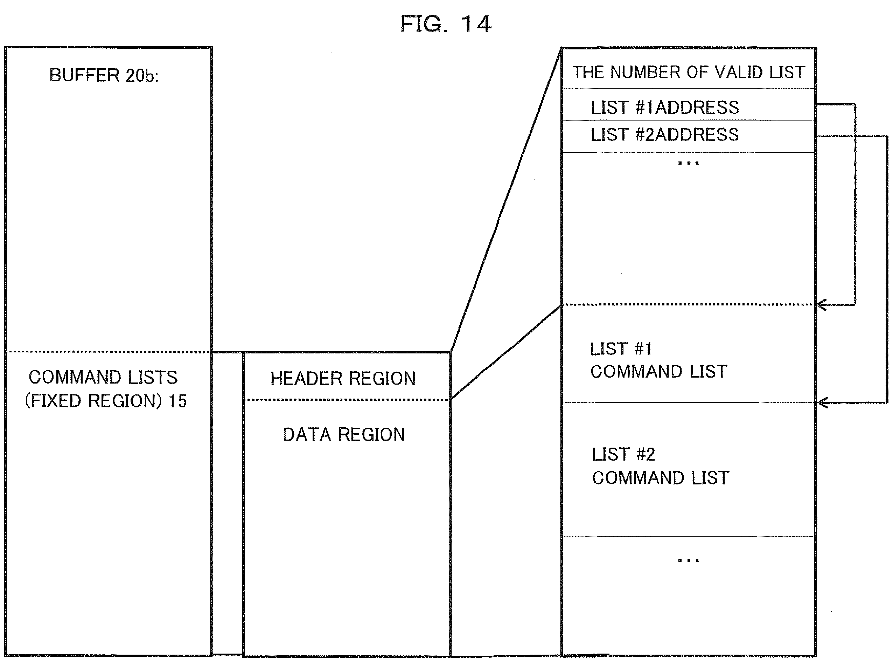

In the computer system 1C of the third embodiment, the buffer 20b secures a fixed region (see Fig. 14) to store the command lists 15. The data format of each command list 15 to be arranged in the fixed region includes, as illustrated in Fig. 14, a number of command lists #1,#2,... stored in the data region. These lists #1, #2,... are managed by the number of valid lists and addresses of the respective lists #1,#2,... that are stored in the header region. This means that a number of command lists 15 can be specified by the respective list numbers #1,#2,... In the third embodiment, the SP 10 previously stores the command lists 15. The command lists 15 are arranged and stored into the fixed region of the buffer 20b by the SP 10 when the computer system 1C is powered on or the SP 10 recognizes mounting of an additional SB 20. Fig. 14 is a diagram illustrating a number of command lists 15 stored in the fixed region of the buffer 20b.

In the computer system 1C of the third embodiment, the SP 10 sends the MBC 20a a list number that specifies one of the command lists 15 to be executed on the particular SB 20 along with an execution instruction of the device control. Responsively, the command obtaining controlling section 4 sequentially reads the commands from the command list 15 specified by the list number sent from the SP 10. The command executing section 5 sequentially carries out processing of the commands read by the command obtaining controlling section 4 on the corresponding SB 20 and thereby controls the devices 21-23.

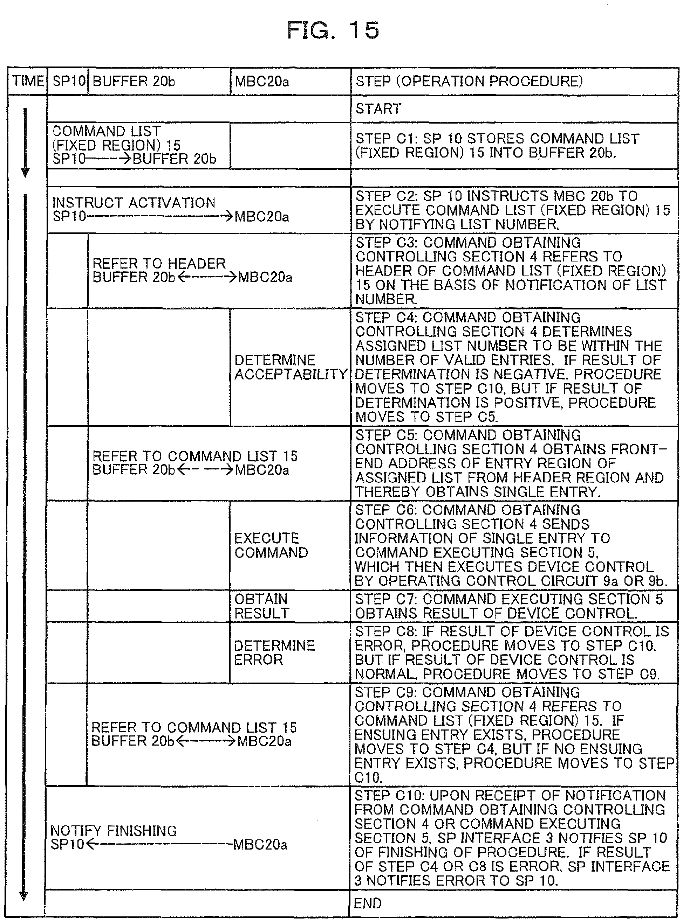

Next, the operation of the computer system 1C of Fig. 13 is described with reference to a flow diagram (steps C1-C10) of Fig. 15.
In the computer system 1C of the third embodiment, when the computer system 1C is powered on or when an additional SB 20 is mounted, a number of command lists 15 are stored in the fixed region of the buffer 20b (step C1). In other words, the command lists 15 are stored not in synchronization with the start of device control.

When the SP 10 is to execute device control on a particular SB 20, the SP 10 notifies the MBC 20a of the particular SB 20 to be controlled of a list number to specify one of the command lists 15 and instructs the MBC 20a to execute device control (step C2). Upon receipt of the above instruction, the SP interface 3 activates the command obtaining controlling section 4, which then refers to the header region of the fixed region that stores the command lists 15 and that is included in the buffer 20b (step C3), and determines the validity of the assigned list number on the basis of the number of valid lists, in other words, determines whether the assigned list number is within the number of valid entries (step C4).

If the assigned list number is absent from the number of valid entries (abnormal), the MBC 20a does not execute processing of the specified command list 15 and immediately moves the procedure to step C10, in which SP interface 3 notifies the SP 10 that the assigned list number is not acceptable.
On the other hand, if the notified list number is present in the number of valid entries (normal), the command obtaining controlling section 4 obtains the front-end address of the entry region of the assigned list number from the header region, obtains a single entry, that is a single command, from the command list 15 in the same entry region (step C5), and sends the entry to the command executing section 5. Then the command executing section 5 selects a control circuit associated with the object device to be controlled at the command between the control circuits 9a and 9b, issues an instruction to the selected control circuit 9a or 9b, and operates the control circuit 9a or 9b, so that the objet device is controlled (step C6).

Upon receipt of the result of the device control (step C7), the command executing section 5 determines whether the result of the device control is normal or error(step C8). If the result of the device control is error, the MBC 20a aborts the execution of the command list 15 and immediately moves the procedure to the step C10, in which SP interface 3 notifies entry error, along with the entry number related to the command of execution error, to the SP 10.

On the other hand, if the result of the device control is normal, the command executing section 5 activates the command obtaining controlling section 4, which refers to the command list 15 to confirm the presence of an ensuing entry. If the ensuing entry exists, the command obtaining controlling section 4 returns the procedure to step C5 and repeats the above procedure again. If no ensuing entry exists, that is, if processing of all the entries on the command list 15 is completed, the MBC 20a moves the procedure to step C10 (step C9) . Upon receipt of the notification that the processing of all the entries is completed, the SP interface 3 notifies the normal completion to the SP 10 (step C10).

Accordingly, likewise the computer system 1 of Fig. 1, even if the number of devices to be controlled by the SP 10 increases in the high-densely mounted computer system 1C of the third embodiment, this configuration can reduce the time for starting up the computer system 1C and concurrently can reduce the load of monitoring devices. It is therefore possible to achieve efficient system control with a small load of controlling the system.

In the computer system 1C of the third embodiment, the SP 10 prepares a number of command lists 15 that can be specified by the list numbers #1,#2,..., which are to be arranged and stored in the fixed region of the buffer 20b when the computer system 1C is powered on or when an additional SB 20 is mounted. This configuration allows device control based on the command list simply by notifying the list number each time the device control is to carry out, which means that forwarding a command list to the SB 20 can be omitted. Consequently, the management by the SP 10 is further simplified to contribute to enhancing the efficiency of system control.

### (5) fourth embodiment:

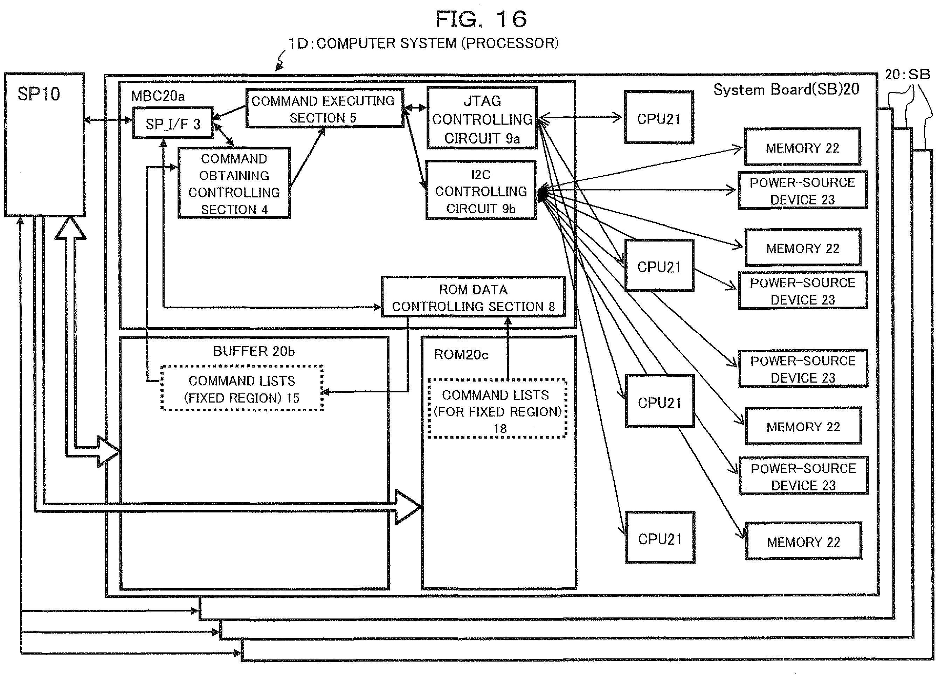

Fig. 16 is a block diagram illustrating the main part of the hardware configuration and the functional configuration of a computer system (processing device) 1D according to the fourth embodiment.
The computer system 1D of Fig. 16 has a similar configuration to that of the computer system 1A of Fig. 3, and parts and elements assigned by the same reference number as those of Fig. 3 represent the same or substantially the same parts and element, so detailed description is omitted here.

The MBC 20a of the computer system 1D includes the SP interface 3, the command obtaining controlling section 4, the command executing section 5, the ROM data controlling section 8, and the control circuit 9a and 9b the same as the first embodiment, but omits the obtained data comparing controlling section 6, and the data storing controlling section 7. The buffer 20b of the computer system 1D includes the command lists 15 of a fixed region, but omits the command list 12, the result comparison value list 13, the obtained data storing region 14, and the device controlling interface table 16. Furthermore, the ROM 20c of the computer system 1D includes the command lists (for a fixed region) 18, but omits the device controlling interface table 17 and the result comparison value list 19.

In the computer system 1D of the fourth embodiment, the command lists 15, which are to be stored in the fixed region of the buffer 20b in the computer system 1C of the third embodiment, are previously stored as the command lists (for a fixed region) 18 in the ROM (second memory) 20c of each SB 20. In this case, when the computer system 1D is powered on or an additional SB 20 is mounted, the ROM data controlling section 8 expands, in response to a list expansion instruction from the SP 10, the command lists (for a fixed portion) 18, as the command lists 15, in the buffer 20b. In the fourth embodiment, a common list number is provided for a number of command lists compatible with the type of the hardware of each SB 20 and also for two or more command lists being compatible with a different type of the hardware but having the same or a similar functions as the command list compatible with the type of the SB 20.

Likewise the third embodiment, in the computer system ID of the fourth embodiment, the SP 10 sends the MBC 20a a list number that specifies one of the command lists 15 to be executed on the particular SB 20 along with an execution instruction of the device control. Then the command obtaining controlling section 4 sequentially reads the commands from the command list 15 specified by the list number sent from the SP 10 among the command lists 15 expanded into the buffer 20b by the ROM data controlling section 8. The command executing section 5 sequentially carries out processing the commands read by the command obtaining controlling section 4 on the corresponding SB 20 and thereby controls a number of devices 21-23.

A normal computer system consists of the same SBs 20, so that the SP 10 carries out various controls on each SB 20 in the same procedure. However, the hardware is sometimes updated with the intension of enhancing the performance, improving functions, and dealing with a problem. The update of the hardware may involve modification in control procedure. A large-scale system or a system that undergoes the replacement of a broken SB 20 may include a number of hardware types, which unavoidably causes the SP 10 to prepare various control procedures compatible with each of the hardware types. In this case, a conventional SP 10 confirms the hardware type of the SB 20, and then executes the control through a procedure compatible with the hardware type, which causes increase of processing time.

Many recent SBs 20 mount thereon devices purchased from other venders. Assuming that a vender decides End Of Life (EOL) of one of the devices on an SB 20, the SB 20 may get along with a substitute device the same in function as the EOL device. In this event, if the control scheme and/or the control procedure of the substitute device are different from those of the EOL device, the control procedure of the devices by the SP 10 needs to be modified, which causes processing to be carried out after the type of each device is confirmed. This also motivates to recognize the type of each device when the processing is to be carried out.

As a solution to the above problem, the command lists (fixed region) 15, that are compatible one with each of the hardware types of the SBs 20 and that are stored in the ROM 20c of the SB 20, allow the SP 10 to instruct execution of device control simply by notifying a common list number to all the SBs 20 irrespective of the hardware types of the SBs 20.

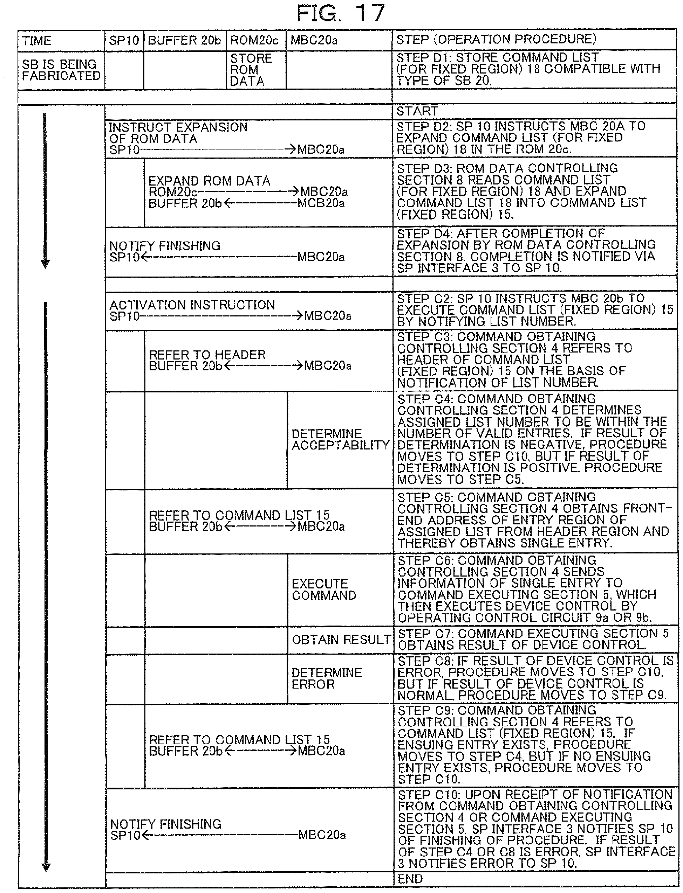

Next, the operation of the computer system 1D of Fig. 16 will now be described with reference to a flow diagram Fig. 17 (steps D1-D4 and C2-C10). Here, the computer system 1D carries out steps D1-D4 as substitute for step C1 carried out in the computer system 1C (see Fig. 15) and subsequently carries out steps C2-C10 as performed in the computer system 1C. Hereinafter, steps D1-D4 will be detailed and description of steps C2-C10 is omitted here.

In the computer system 1D of the fourth embodiment, the command list (for a fixed region) 18 compatible with the type of an SB 20 is stored during manufacturing the SB 20 (step D1).
At a timing of recognizing that the computer system 1D is powered on or an additional SB 20 is mounted, the SP 10 instructs the MBC 20a of a particular SB 20 to expand the command lists (for a fixed region) 18 into the buffer 20b (step D2). Upon receipt of the instruction, the SP interface 3 activates the ROM data controlling section 8. The ROM data controlling section 8 expands the command lists (for a fixed region) 18 stored in the ROM 20c, as the command lists 15, into the fixed region of the buffer 20b (step D3). Upon completion of the expansion, the ROM data controlling section 8 notifies the completion of the expansion to the SP 10 through the SP interface 3 (step D4). The subsequent steps are the same as steps C2-C10 described with reference to Fig. 15, so that the MBC 20a executes device control.

Accordingly, similarly to computer system 1 of Fig. 1, even if the number of devices to be controlled by the SP 10 increases in the high-densely mounted computer system 1D of the fourth embodiment, the computer system 1D can rapidly start up and can greatly reduce the load of monitoring devices on the SP 10. Thereby, efficient control low in load on system control can be achieved in the computer system 1D.

Likewise the computer system 1C of the third embodiment,the computer system 1D of the fourth embodiment prepares a number of command lists 15 that can be specified by the list numbers #1, #2, ..., which are previously stored as the command lists 18 in the ROM 20c and which are to be arranged and stored in the fixed region of the buffer 20b when the computer system 1D is powered on or when an additional SB 20 is mounted. This configuration allows device control based on the command list simply by notifying the list number each time the device control is to carry out, which means that forwarding a command list to the SB 20 can be omitted. Consequently, the management by the SP 10 is further simplified to contribute to enhancing the efficiency of system control.

Furthermore, the computer system 1D of the fourth embodiment stores a command lists (fixed region) 18 compatible with the type of the hardware of an SB 20 in the ROM 20c of the same SB 20, so that the SP 10 can instruct all the SBs to execute device control with the common list number irrespective of the hardware types of the SBs 20.

### (5) others:

The preferred embodiments of the present invention are detailed above. However, the present invention should by no means be limited to the foregoing embodiments and various change and modification can be suggested without departing from the gist of the present invention.
The embodiments assume that the control interface schemes for device control to be mounted onto an SB 20 are two kinds of JTAG and I2C. However, the present invention is not limited to these schemes and other control interface schemes can be adopted similarly to JTAG and I2C.
All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments have been described in detail, it should be understood that the various changes, substitutions, and alterations could be made hereto without departing from the spirit and scope of the invention.

## Claims

1. A processing device including a plurality of boards, each including a number of devices mounted thereon, and a manager that manages the plurality of boards,
each of the plurality of boards comprising:
a first memory that stores procedural steps of processing to be carried out on the board; and
a controller that, in response to an execution instruction from the manager, sequentially reads the procedural steps from the first memory, controls the devices on the board through sequentially carrying out processing corresponding to each of the read procedural steps, and notifies a result of the carrying out the procedural steps to the manager.

2. The processing device according to claim 1,
wherein
the procedural steps are stored in the form of a command list containing commands to be carried out on the board, the command list being stored in the first memory; and
in response to the execution instructions from the manager, the controller sequentially reads the commands from the command list, controls the devices on the board through sequentially carrying out processing corresponding to each of the read commands, and notifies the result of the carrying out the command list to the manager.

3. The processing device according to claim 2,
wherein the manager sends the execution instruction to the controller after the manager stores the command list into the first memory.

4. The processing device according to claim 2, wherein:
the first memory stores a plurality of the command lists that are specified by respective list numbers;
the manager sends the controller, along with the execution instruction, a list number that specifies one of the plurality of the command lists that is to be carried out on the board; and
the controller sequentially reads the commands from the command list specified by the list number sent from the manager, and controls the devices on the board through sequentially carrying out processing corresponding to each of the read commands.

5. The processing device according to claim 2, wherein:
the board further comprises
a second memory that previously stores a plurality of the command lists that are specified by respective list numbers and that are corresponding to the number of types of hardware of the board, and
a list expanding section that expands, in response to a list expansion instruction from the manager, the plurality of command lists stored in the second memory into the first memory;
a common list number is provided for two or more of the plurality of command lists compatible with a type of hardware of the board and for two or more of the plurality of command lists that are compatible with a different type of hardware and that have the same or a similar function as the command list of the board;
the manager sends the controller, along with the execution instruction, a list number that specifies one of the plurality of the command lists that is to be carried out on the board; and
the controller sequentially reads the commands from the command list specified by the list number sent from the manager among the plurality of command lists expanded in the first memory by the list expanding section, and controls the devices on the board through sequentially carrying out processing corresponding to each of the read commands.

6. The processing device according to claim 5,
wherein the manager sends the list expansion instruction to the list expanding section when the processing device is powered on or when an additional board is mounted into the processing device.

7. The processing device according to one of claims 2-6, wherein:
each of the devices on the board is controlled by the controller via one of a plurality of control interfacing schemes;
the controller comprises
a plurality of interfaces, corresponding one to each of the plurality of control interfacing schemes,
a reading section that sequentially reads, in response to the execution instruction from the manager, the commands from the command list stored in the first memory, and
a command executing unit that specifies, on the basis of the commands read by the reading section, one or more object devices that are to be controlled among the devices, selects an interface corresponding to each of the specified object devices from the plurality of interfaces, and controls each of the specified object devices through the selected interface at the commands.

8. The processing device according to claim 7, wherein:
the first memory stores an interface table that stores the plurality of devices and the plurality of interfaces in association with each other; and
upon the object devices being specified,
the command executing section selects the interface corresponding to each of the specified object devices with reference to the interface table, generates control information having a format compatible with the selected interface, and controls each of the specified object devices through the selected interface on the basis of the generated control information.

9. The processing device according to claim 8,
wherein
the board further comprises:
a third memory that previously stores the interface table; and
a table expanding section that expands, in response to a table expansion instruction from the manager, the interface table stored in the third memory into the first memory.

10. The processing device according to claim 9,
wherein the manager sends the table expansion instruction to the table expanding section when the processing device is powered on or when an additional board is mounted into the processing device.

11. The processing device according to one of claims 2-10, wherein:
the controller stores result data obtained by carrying out the processing corresponding to the read commands on the boards into the first memory, and upon completion of the processing corresponding to the read commands, sends the manager a finishing notification that the processing finishes; and
the manager reads, in response to the finishing notification from the controller, the result data from the first memory.

12. The processing device according to one of claims 2-11, wherein:
a flag is set for each of the commands in the command list, the flag indicating whether a result of executing the command is to be compared;
the first memory further stores comparison data to be compared with a result of executing each of the commands;
the board further comprises a comparing section that compares, if the flag set for each of the read commands indicates that a result of executing the command is to be compared, the result of executing the command with the comparison data; and
if a result of the comparing by the comparing section is acceptable, the controller carries out processing of one or more of the commands subsequent to the command that has the acceptable comparing result in the command list while if the result of the comparing by the comparing section is not acceptable, the controller notifies error information to the manager.

13. A controlling unit for a processing device including a plurality of boards each including the controlling unit and a number of devices mounted thereon, and a manager that manages the plurality of boards, the controlling unit comprising:
a first memory that stores procedural steps of processing to be carried out on the board including the controlling unit; and
a controller that, in response to an execution instruction from the manager, sequentially reads the procedural steps from the first memory, controls the devices on the board through sequentially carrying out processing corresponding to each of the read procedural steps, and notifies a result of the carrying out the procedural steps to the manager.

14. The controlling unit according to claim 13,
wherein
the procedural steps are stored in the form of a command list containing commands to be carried out on the board, the command list being stored in the first memory; and
in response to the execution instruction from the manger, the controlier sequentially reads the commands from the command list, controls the devices on the board through sequentially carrying out processing corresponding to each of the read commands, and notifies the result of the carrying out the command list to the manager.

15. A method for processing in a processing device including a plurality of boards, each including a number of devices mounted thereon, and a manager that manages the plurality of boards, the method comprising:
at each of the plurality of boards
sequentially reading, in response to an execution instruction from the manager, procedural steps of processing to be carried out on the board from a memory;
controlling the devices on the board through sequentially carrying out processing corresponding to each of the read procedural steps; and
notifying a result of the carrying out the procedural steps to the manager.
